# EUROPEAN PATENT SPECIFICATION

(11) **EP 2 712 794 B1**
(45) Date of publication and mention of the grant of the patent: **26.10.2016**
(21) Application number: 13183101.8
(22) Date of filing: 05.09.2013
(51) Int. Cl.: B62J 6/02, B62J 17/02, B62K 25/28, B62H 1/02, B62K 11/04, F02M 35/16

(54) **Front cowl structure for saddle riding type vehicle**
Vorderstruktur eines Sattelfahrzeugs
Structure de capot avant de véhicule de type à enfourcher

(30) Priority: 28.09.2012 JP 2012217662
(43) Date of publication of application: 02.04.2014
(73) Proprietor: Honda Motor Co., Ltd., Tokyo 107-8556 (JP)
(72) Inventor: Maeda, Rui, Saitama, 351-0193 (JP); Korogi, Yoshinori, Saitama, 351-0193 (JP); Takasaki, Atsushi, Saitama, 351-0193 (JP); Yokokawa, Shunji, Saitama, 351-0193 (JP)
(74) Representative: Beder, Jens

(56) References cited:
- EP-A1- 2 106 991
- EP-A1- 2 168 852
- EP-A1- 2 583 884
- WO-A1-2009/118997
- FR-A1- 2 616 734

## Description

The present invention relates generally to front cowl structures for saddle riding type vehicles and, more particularly, to a front cowl structure for a saddle riding type vehicle with improved turning performance.

JP 2010-149806, for example, discloses a structure for a known saddle riding type vehicle, the structure including a covering member, such as a front cowl, for covering a vehicle body.

In the structure including the front cowl disclosed in, for example, JP 2010-149806, air is made to flow along a surface of the front cowl to thereby protect a rider from the airflow. Additionally, the front cowl is generally designed so as to ensure that the airflow is a laminar flow in order to minimize airflow resistance as much as possible.

While a vehicle is running, however, the air flowing along the surface of the front cowl sticks to the cowl surface, specifically, what is called a stick phenomenon occurs. As a result, a greater resistance acts on, for example, an operation of tilting the vehicle to the left or right. A leaning force, in particular, is required when the vehicle is to be leaned to one side and turned.

A front cowl structure for a saddle riding type vehicle, in which all features of the preamble of claim 1 are disclosed, is described in WO-A-2009/118997.

From FR-A-2 616 734 it is known a front cowl for a saddle riding type vehicle comprising an air inlet for introducing an air flow to reduce the difference between air pressures inside and outside of the cowling.

EP-A-2 106 991 a front cowl structure including a pair of headlights disposed on both leading end lateral sides of the front cowl and headlight neighboring openings communicating with an inside of the front cowl.

The present invention has been made in view of the foregoing situation and it is an object of the present invention to provide a front cowl structure for a saddle riding type vehicle, capable of containing a stick phenomenon of an airflow in the front cowl.

This object is achieved by a front cowl structure for a saddle riding type vehicle according to the enclosed independent claim 1. Advantageous features of the present invention are defined in the corresponding subclaims.

In the present invention as defined in claim 1, the front cowl structure has the headlight neighboring openings formed on sides rearward of the lens surfaces of the headlights, the headlight neighboring openings communicating with the inside of the front cowl. This causes part of an airflow flowing along the lens surfaces of the headlights to flow in the headlight neighboring openings. This causes the airflow over the lens surface to be divided to follow different paths so that a laminar flow condition of the airflow over the lens surfaces is disrupted. The airflow can then be separated from the vehicle body in rearward portions of the headlights. Consequently, only a small force is required when the vehicle body is to be leaned to one side and turning performance of the vehicle can be enhanced.

Further, the headlight neighboring openings are each a slit-shaped opening extending in a vehicle body vertical direction and are each formed by the lens edge portion of the lens surface of the headlight and the headlight opposing edge portions of the front cowl. This eliminates the need for forming any special opening in the front cowl. Additionally, the airflow flowing along the lens surfaces of the headlights can be easily guided to the headlight neighboring openings, which enables effective separation of the airflow and enhances turning performance of the vehicle.

In the present invention as defined in claim 2, the headlight opposing edge portions of the front cowl are formed so as to have a step that bulges outwardly relative to the surfaces of the headlights. This allows the airflow flowing over the lens surfaces of the headlights to be separated and the vehicle turning performance can be enhanced.

In the present invention as defined in claim 3, the side openings are formed to allow the airflow that has flowed in through the headlight neighboring openings to flow out of the front cowl in the vehicle width direction. Therefore, airflows jetting out from the side openings cause an airflow flowing along the front cowl surfaces to be forcedly separated, which enhances vehicle turning performance. In addition, the side openings are symmetrical. This achieves uniform turning performance on both lateral sides of the vehicle.

In the present invention as defined in claim 4, the airflow guide portion changes the direction in which the airflow that has flowed in through the headlight neighboring opening flows toward the side opening. This enables the airflow to jet out from the side opening, so that the airflow flowing over the front cowl surface can be forcedly and effectively separated and the vehicle turning performance can be enhanced.

In the present invention as defined in claim 5, the side openings are each formed into a slit. As a result, an airflow that jets out from the side opening has a certain width along a vehicle body vertical direction. An effect of separating the airflow flowing over the front cowl surface can thus be sufficiently produced. The airflow flowing over the front cowl surface can thus be forcedly and effectively separated and the vehicle turning performance can be enhanced.
Fig. 1 is a left side elevational view showing a motorcycle according to a first embodiment of the present invention.
Fig. 2 is a front elevational view showing a front cowl in the motorcycle shown in Fig. 1.
Fig. 3 is a perspective view showing the front cowl in the motorcycle shown in Fig. 1.
Fig. 4 is a horizontal cross-sectional view schematically showing a main section of a leading end portion, horizontally cut away, of the front cowl in the motorcycle shown in Fig. 1.
Fig. 5 is an enlarged cross-sectional view schematically showing portion A in Fig. 4.
Fig. 6 is a schematic cross-sectional view taken along line B-B in Fig. 3.
Fig. 7 is a front elevational view showing a main section of a front cowl portion according to a second embodiment of the present invention.
Fig. 8 is a side elevational view showing a main section of a front cowl portion according to a third embodiment of the present invention.

Specific embodiments to which the present invention is applied will be described below.

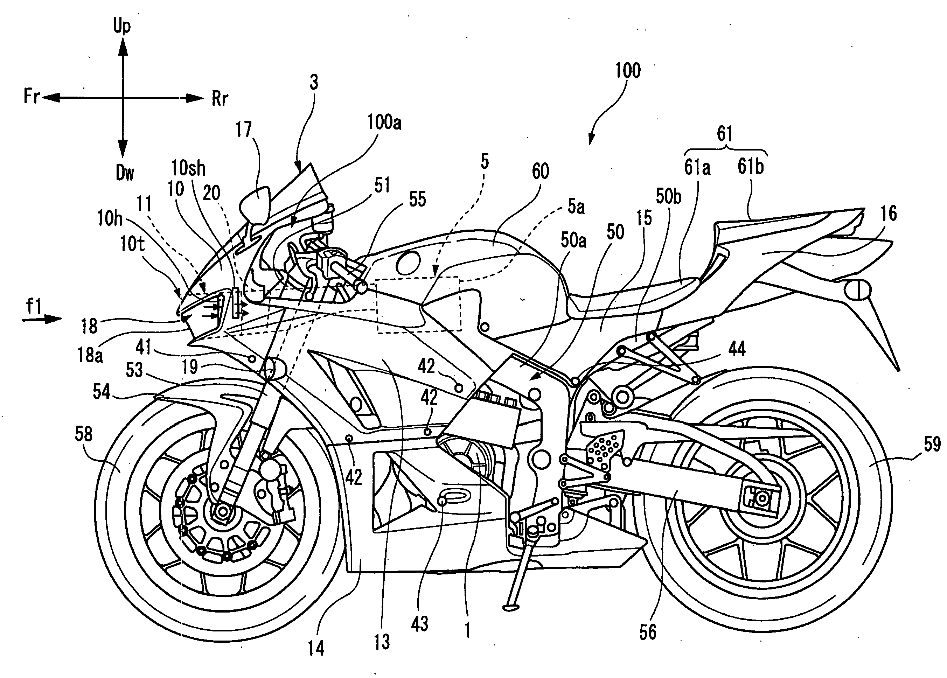

A motorcycle incorporating a front cowl structure for a saddle riding type vehicle according to a first embodiment of the present invention will be described in detail below with reference to Figs. 1 to 6.

The drawings should be viewed in the direction of reference numerals. The drawings show arrows to indicate directions relative to a running direction of the motorcycle, an arrow Fr denoting a vehicle forward direction, an arrow Rr denoting a vehicle rearward direction, an arrow Up denoting a vehicle upward direction, and an arrow Dw denoting a vehicle downward direction, respectively.

Fig. 1 is a side elevational view showing a motorcycle 100 according to a first embodiment of the present invention.

The motorcycle 100 includes a vehicle body frame 50 that assumes a framework on which various component parts are attached. The vehicle body frame 50 includes a head pipe 51 disposed at a vehicle front end portion and a pair of left and right main frames 50a that branch laterally from the head pipe 51 and extend obliquely downwardly toward the rear. An engine 1 is held on a lower side of the main frames 50a as appropriate. A front fork 53 that supports a front wheel 58 is steerably supported on the head pipe 51. A steering handlebar 55 is connected to an upper portion of the front fork 53.

A rear fork 56 that supports a rear wheel 59 is vertically swingably supported on the vehicle body frame 50. The rear fork 56 is suspended as appropriate on the main frames 50a via suspension means.

A fuel tank 60 is disposed at an upper portion of the main frames 50a of the vehicle body frame 50. A riding seat 61 including a rider's seat 61a and a passenger's seat 61b is disposed at a rear portion of the vehicle body frame 50.

A pair of left and right seat rails 50b is disposed rearwardly of the vehicle body frame 50, each of the left and right seat rails 50b including a plurality of seat rails extending obliquely upwardly from a rear end portion of the main frames 50a to the rear. The riding seat 61, for example, is held on the seat rails 50b.

The motorcycle 100 according to the first embodiment of the present invention has an outside covered in a vehicle body cover 3 as appropriate. Specifically, the vehicle body cover 3 cover vehicle component parts and electrical parts as appropriate and includes, for example, a front cowl 10, a side cowl 13, a bottom cowl 14, a seat lower cover 15, and a rear cover 16. The front cowl 10 covers a vehicle front portion side as a vehicle leading end portion 100a. The side cowl 13 covers parts extending from an upper portion side surface side of the engine 1 to a downward side of the fuel tank 60 at an area rearward of the front cowl 10. The bottom cowl 14 covers a downward side of the engine 1. The seat lower cover 15 covers parts extending from a rearward side of the side cowl 13 to a downward side of the rider's seat 61a. The rear cover 16 covers a lower side of the passenger's seat 61b at an area rearward of the seat lower cover 15. It is noted that the vehicle body cover 3 is substantially symmetrical in shape on both sides of the vehicle for covering the vehicle body.

The front cowl 10, the side cowl 13, the bottom cowl 14, the seat lower cover 15, and the rear cover 16 are fixed to the vehicle body via mounting screws 41, 42, 43, 44 and the like as appropriate.

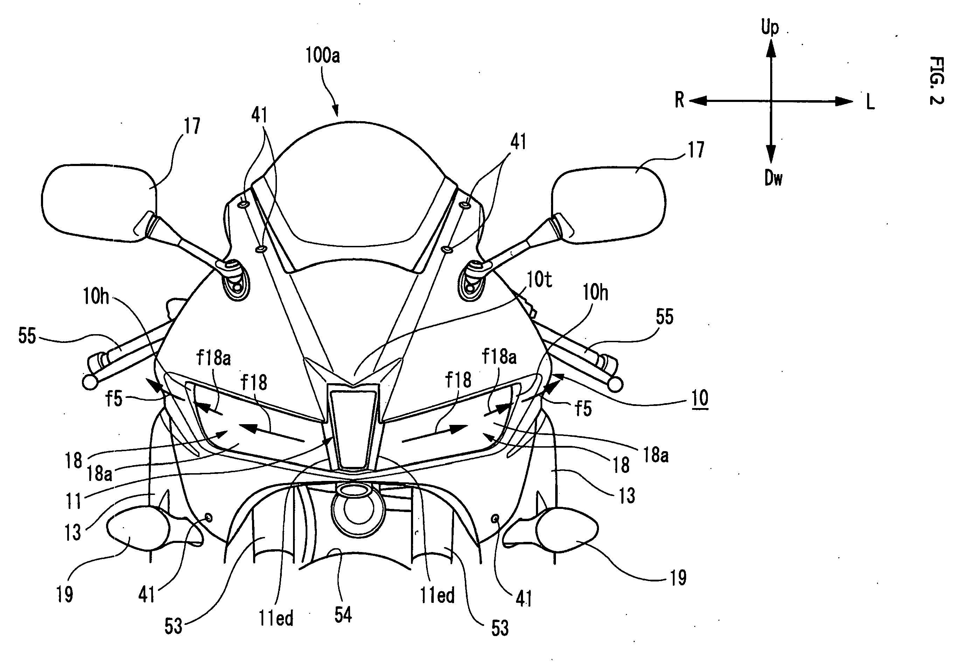

As shown in Fig. 2, the front cowl 10 and the side cowl 13 generally cover, on a side upward of a front fender 54, parts other than a rearview mirror 17, a direction indicator 19, and the handlebar 55 that are members protruding in a vehicle width direction. The front cowl 10 and the side cowl 13 are designed to achieve smooth streams of air along the upper and side portions of the vehicle. The front cowl 10, in particular, uses an airflow to generate a down force as appropriate, thereby contributing to steady vehicle running.

In the first embodiment of the present invention, a pair of left and right headlights 18, 18 is disposed at a cowl leading end portion 10t of the front cowl 10. The headlights 18, 18 are each formed into a horizontally long, substantially rectangular shape extending from a front surface side of the front cowl 10 to a corresponding lateral surface, so that a lens surface 18a is formed into an outer surface shape extending substantially along a cowl outer surface. The headlights 18, 18 are thus formed so that air flows smoothly along the lens surfaces 18a, 18a while the vehicle is running. The front cowl 10 has a cowl front surface opening 11 (see Fig. 2) formed between the headlights 18, 18, so that air from a forward direction is supplied via a duct 20 of an intake system 5 to an air cleaner 5a disposed at a lower side of the fuel tank 60.

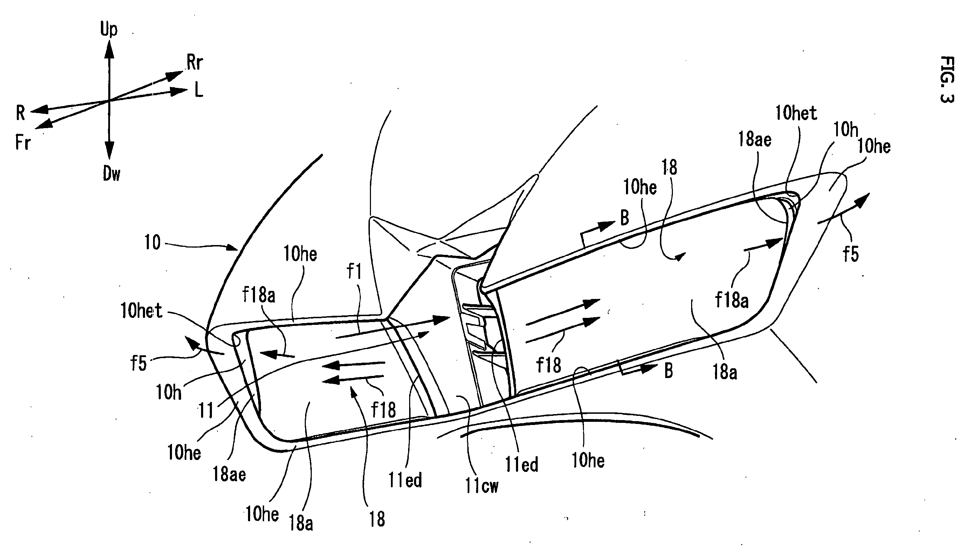

Referring to Figs. 2 and 3, in the first embodiment of the present invention, the headlights 18, 18 are disposed on both lateral sides of the cowl front surface opening 11 at a frontmost end of the front cowl 10 covering the vehicle leading end portion 100a.

As described earlier, the headlights 18, 18 are each formed into a substantially rectangular shape such that the lens surface 18a is curved to extend toward the rear of the vehicle substantially along the cowl outer surface. In addition, the lens surfaces 18a, 18a are formed generally downwardly (see Fig. 1).

In the first embodiment of the present invention, the front cowl 10 has headlight neighboring openings 10h, 10h disposed on vehicle rearward sides of the lens surfaces 18a, 18a. The headlight neighboring openings 10h, 10h communicate with an inside of the front cowl 10.

The headlight neighboring openings 10h, 10h that communicate with the inside of the front cowl 10 and are formed at the rear portion side of the lens surfaces 18a, 18a of the headlights 18, 18 allow part of a lens surface airflow f18 flowing along the lens surfaces 18a, 18a to flow into the headlight neighboring openings 10h, 10h, thus forming inflow air f18a. Another part of the lens surface airflow f18 flows past the lens surfaces 18a, 18a to form a surface airflow f5 that flows from a vehicle side surface toward the rear of the vehicle. The lens surface airflow f18 over the lens surfaces 18a, 18a branches into different flow paths as described above, which disrupts a laminar flow condition of the lens surface airflow f18. As a result, separation occurs in the lens surface airflow f18 at headlight opposing edge portions 10he, 10he on rear portion sides of the headlights 18, 18 (on both sides of the vehicle). This separation of the lens surface airflow f18 contains the stick phenomenon of the airflow, thus enhancing vehicle turning performance.

In the first embodiment of the present invention, referring to Fig. 3, the headlight neighboring openings 10h, 10h are each formed to be vertically long between the headlight 18 and the front cowl 10. Specifically, a gap between a lens edge portion 18ae of the lens surface 18a of the headlight 18 and the headlight opposing edge portion 10he of the front cowl 10 forms a slit-shaped opening. In addition, the headlight opposing edge portions 10he, 10he are such that, in a vehicle front view, a gap is the widest at the upper portion of the slit and gradually narrows toward the lower portion thereof. Opening contour portions 10het, 10het of the headlight opposing edge portions 10he, 10he are shaped to approximate curved lines of the lens edge portions 18ae, 18ae.

The headlight neighboring openings 10h, 10h, being formed into a slit by the lens edge portions 18ae, 18ae of the headlights 18, 18 and the opening contour portions 10het, 10het of the front cowl 10 as described above, eliminates the need for forming any special opening in the front cowl 10. Additionally, the headlight neighboring openings 10h, 10h, being formed to be vertically long in the vertical direction of the headlights 18, 18, allows the airflow flowing along the lens surfaces 18a, 18a to be guided easily into the headlight neighboring openings 10h, 10h with a predetermined width. This enables effective separation of the airflow.

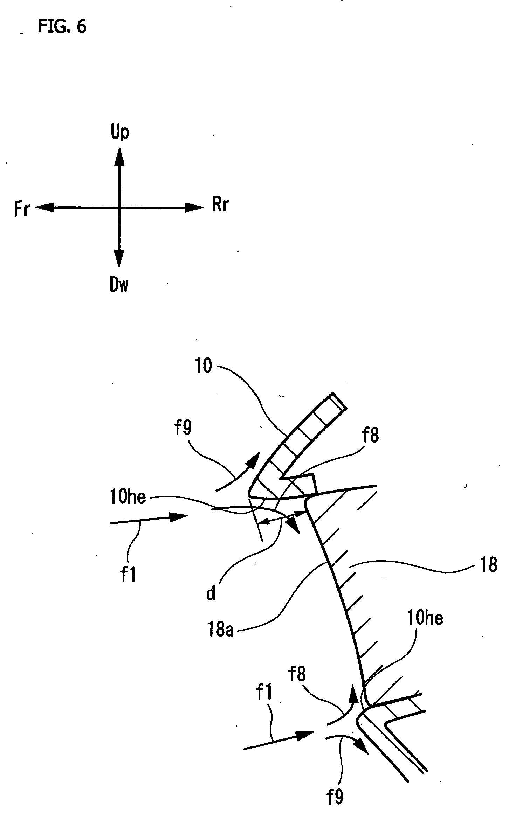

Referring to Fig. 6, as part of structures around of the headlights 18, 18 in the first embodiment of the present invention, the headlight opposing edge portions 10he, 10he of the front cowl 10 are formed so as to bulge outwardly in the vehicle (toward the vehicle forward side in Fig. 6) relative to the lens surface 18a of the headlight 18. This creates a difference in level d between the headlight opposing edge portions 10he, 10he and the lens surface 18a of the headlight 18. The difference in level d is formed at upper and lower sides and the outer sides in the vehicle width direction of the lens surface 18a; however, no difference in step is formed on the inside in the vehicle width direction of the lens surface 18a because the lens itself of the headlight 18 has an opening edge portion 11ed.

The difference in level d formed as described above between the headlight opposing edge portions 10he, 10he and the lens surface 18a creates turbulence in the airflow.

In addition, referring to Fig. 3, the lens edge portion 18ae is disposed rearwardly in the vehicle relative to the opening contour portion 10het and the difference in level d is also formed between the lens edge portion 18ae and the opening contour portion 10het. This causes the lens surface airflow f18 flowing along the lens surface 18a to tend more easily to advance into the inside of the opening contour portion 10het. As such, in the area around the lens surface 18a, the separation of the airflow flowing along the lens surface 18a tends more easily to occur. For example, referring to Fig. 6, at the upper and lower headlight opposing edge portions 10he, 10he adjacent to the lens surface 18a, an airflow f1 flowing from the vehicle forward direction is separated into a lens-side airflow f8 and a non-lens-side airflow f9 and this separation of the airflow f1 also causes turbulence to occur.

The first embodiment of the present invention includes a structure that causes the airflow flowing through the headlight neighboring openings 10h, 10h to flow out in a predetermined direction.

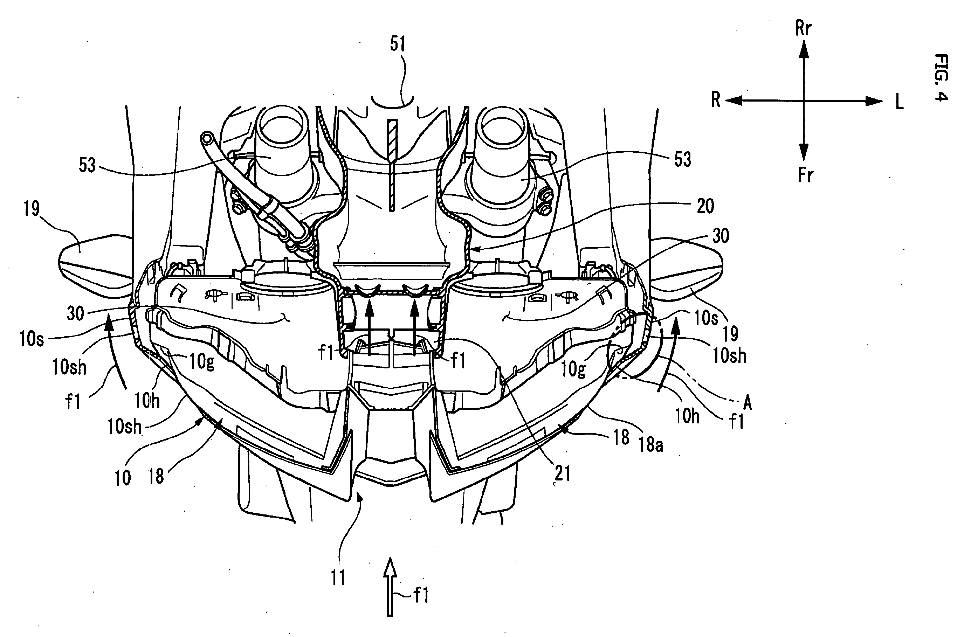

For example, as shown in Figs. 1 and 4, the structure that causes the airflow inside the cowl to flow out in a predetermined direction has side openings 10sh, 10sh formed on both lateral sides of the front cowl 10, rearwardly of the headlight neighboring openings 10h, 10h.

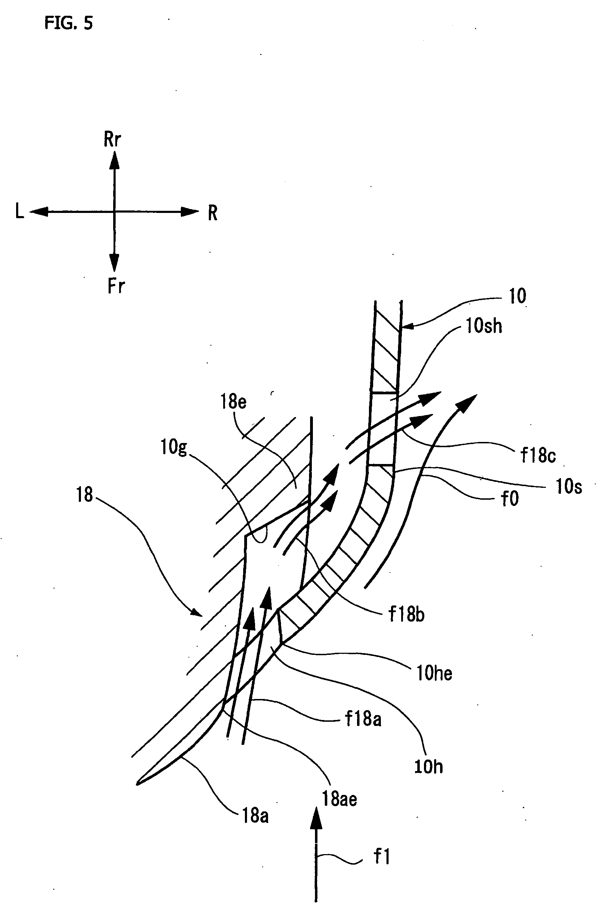

An effect of the side openings 10sh, 10sh will be described below with reference to Fig. 5.

The inflow air f18a flows into the inside of the cowl through the headlight neighboring opening 10h. The inflow of the inflow air f18a causes an internal airflow fl8b generated inside the front cowl 10 to flow in the vehicle width direction and eventually flow out of the cowl as a jet branch flow f18c from the side opening 10sh. Meanwhile, the airflow f1 flows along a front cowl side surface 10s on either lateral side of the front cowl 10. In an area in which the jet branch flow f18c flows, however, outflow pressure of the jet branch flow f18c pushes the airflow f1 outwardly to either lateral side of the vehicle, thus producing a separated flow f0.

The side openings 10sh, 10sh formed on the outside of the front cowl 10 in the vehicle width direction enable the inflow air f18a that has flowed in through the headlight neighboring openings 10h, 10h to flow out of the front cowl 10 toward the lateral outward directions. This allows the airflow f1 flowing along the front cowl side surfaces 10s, 10s to be pushed to be forcedly separated from the cowl surface. As a result, the stick phenomenon of the airflow f1 can be contained and turning performance of the vehicle can thereby be enhanced.

In the first embodiment of the present invention, the side openings 10sh, 10sh are symmetrical about the center of the vehicle. This equalizes possible effects on the vehicle body from the airflow flowing along both lateral sides of the vehicle, thus achieving uniform turning performance on both lateral sides of the vehicle.

In the first embodiment of the present invention, the side openings 10sh, 10sh are each formed into a vertically long slit extending in the vehicle body vertical direction as shown in Fig. 1.

Forming the side opening 10sh into a slit as described above allows the jet branch flow f18c that jets out from the side opening 10sh to be formed to have a certain width along the vehicle body vertical direction. This enables the airflow flowing along the front cowl side surface to be separated over a range extending along the vehicle body vertical direction.

In addition, the first embodiment of the present invention is designed to increase jet-out pressure of the jet branch flow f18c. Referring to Fig. 5, an airflow guide portion 10g is disposed at a side end portion 18e joined to the lens surface 18a. The airflow guide portion 10g guides the inflow air f18a flowing in from the headlight neighboring opening 10h toward the side of the side opening 10sh. The airflow guide portion 10g is disposed rearwardly of the headlight neighboring opening 10h. Furthermore, the airflow guide portion 10g has a front surface that is inclined toward the side opening 10sh.

Consequently, as shown in Fig. 5, the inflow air f18a flowing in from the headlight neighboring opening 10h undergoes a change in the direction of flow by the airflow guide portion 10g toward the vehicle lateral direction to thereby form an inclined airflow (internal airflow) fl8b that, in turn, forms the jet branch flow f18c jetting out from the side opening 10sh. The airflow guide portion 10g increases the jet-out pressure of the jet branch flow f18c, so that the airflow flowing along the front cowl surface can be separated more effectively, which enhances the turning performance of the vehicle further.

Preferably, the airflow guide portion 10g has, for example, a guide surface having a vertical dimension equal to, or more than, a vertical length of the side opening 10sh.

### Second embodiment

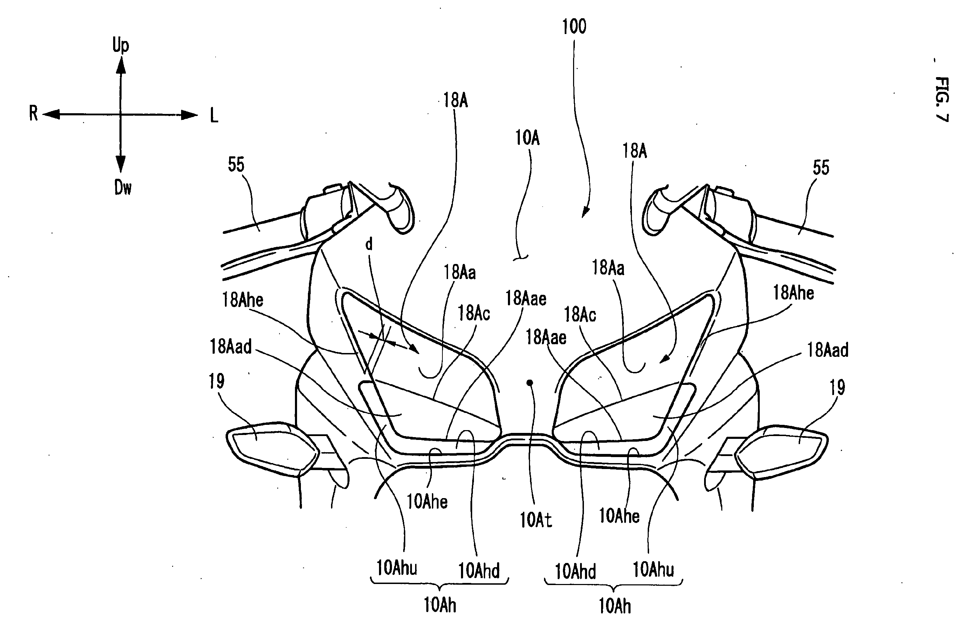

A motorcycle according to a second embodiment of the present invention will be described below with reference to Fig. 7. Fig. 7 is a front elevational view showing a main section of a front cowl portion of a motorcycle according to the second embodiment of the present invention.

Like or corresponding parts are identified by the same reference symbols as those used for the first embodiment of the present invention and descriptions for those parts will be omitted.

The second embodiment of the present invention differs from the first embodiment of the present invention in structures of a front cowl 10A, lens surfaces 18Aa, 18Aa of headlights 18A, 18A, and headlight neighboring openings 10Ah, 10Ah.

Specifically, as shown in Fig. 7, the front cowl 10A does not have a cowl front surface opening 11 and the headlights 18A, 18A are disposed on both lateral sides of a cowl leading end portion 10At.

The headlights 18A, 18A have the lens surfaces 18Aa, 18Aa not oriented generally downwardly as in the first embodiment of the present invention. Specifically, the headlights 18A, 18A according to the second embodiment of the present invention have the lens surfaces 18Aa, 18Aa that are formed as follows. Specifically, when viewed from the front, the lens surfaces 18Aa, 18Aa are each oriented toward substantially two different directions with a lens leading end portion 18Ac (that is indicated by a straight line for convenience sake and, in reality, a curved surface) as a boundary, the lens leading end portion 18Ac being disposed on a slightly downward side and extending laterally, and defining a lens downward portion 18Aad that is oriented downwardly.

The headlight neighboring openings 10Ah, 10Ah according to the second embodiment of the present invention are each formed into an L-shaped slit or a slit having an L-shape turned around in a front view, the headlight neighboring opening 10Ah joining a headlight opposing edge portion 10Ahe on the lens lower end side and the vehicle outside, relative to a lens edge portion 18Aae of the lens downward portion 18Aad. The headlight neighboring opening 10Ah, being disposed relative to the portion of the lens surface 18Aa facing downwardly as described above, allows the airflow flowing over the lens downward portion 18Aad to be easily guided to the headlight neighboring opening 10Ah.

In the second embodiment of the present invention, too, the headlight opposing edge portions 10Ahe, 10Ahe of the front cowl 10A are formed so as to bulge outwardly of the vehicle relative to the lens surfaces 18Aa, 18Aa of the headlights 18A, 18A, so that a difference in level d is formed between the headlight opposing edge portions 10Ahe, 10Ahe of the front cowl 10A and the lens surfaces 18Aa, 18Aa of the headlights 18A, 18A.

The headlight neighboring openings 10Ah, 10Ah formed into an L-shaped slit and a slit having an L-shape turned around offer a greater opening area of the headlight neighboring openings 10Ah, 10ah than in the first embodiment of the present invention. In addition, the headlight neighboring openings 10Ah, 10Ah are shaped to follow a profile of the headlights 18A, 18A. The headlight neighboring openings 10Ah, 10Ah are thus advantageous for their not affecting the shape of the front cowl 10A and being less noticeable.

### Third embodiment

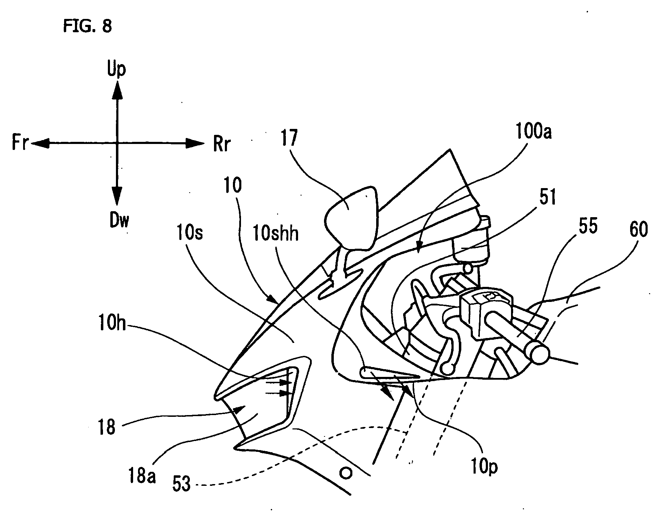

A motorcycle according to a third embodiment of the present invention will be described below with reference to Fig. 8. Fig. 8 is a side elevational view showing a main section of a front cowl portion of a motorcycle according to the third embodiment of the present invention.

Like or corresponding parts are identified by the same reference symbols as those used for the first embodiment of the present invention and descriptions for those parts will be omitted.

The third embodiment of the present invention has a structure identical to that of the first embodiment of the present invention except for side openings 10shh, 10shh (only the side opening 10shh on the left side is shown).

Referring to Fig. 8, the side opening 10shh is disposed rearwardly of a headlight neighboring opening 10Ah and formed to extend in a substantially horizontal direction. The side opening 10shh is formed into a slit with a width largest at a forward side and gradually decreasing toward the rear. The side opening 10shh having the longitudinally long shape as described above allows the airflow entering through the headlight neighboring opening 10Ah to be easily jetted out of the cowl. In addition, the side opening 10shh may be formed at any appropriate position as long as the position is rearward of the headlight neighboring opening 10Ah. In the third embodiment of the present invention, for example, the side opening 10shh is disposed so as to extend along an irregular line 10p on the cowl surface in a less noticeable manner in a side view.

In the above-described embodiments of the present invention, the headlight neighboring opening is shaped into a slit. The position of the headlight neighboring opening and the number of headlight neighboring openings may be changed as appropriate.

In the first embodiment of the present invention, the airflow guide portion is disposed at an end portion joined to the lens surface. However, not only the position at which the airflow guide portion is formed, but also the shape of the airflow guide portion, may be changed in various ways as long as the airflow inside the cowl is directed toward the side opening. For example, the airflow guide portion may be a guide surface joined to the side opening or the guide surface may have a curved surface as appropriate.

While the foregoing embodiments of the present invention have been described to be applied to a motorcycle, the present invention is still applicable to a front cowl structure for other types of saddle riding type vehicles.
- 1: Engine
- 3: Vehicle body cover
- 10, 10A: Front cowl
- 10g: Airflow guide portion
- 10he: Headlight opposing edge portion
- 10sh, 10shh: Side opening
- 10h, 10Ah: Headlight neighboring opening
- 10t: Cowl leading end portion
- 18, 18A: Headlight
- 18a, 18Aa: Lens surface
- 18ae: Lens edge portion
- 100: Motorcycle (saddle riding type vehicle)
- 100a: Vehicle leading end portion

## Claims

1. A front cowl structure for a saddle riding type vehicle (100), comprising:
a front cowl (10, 10A) for covering at least a vehicle leading end portion (100a); and
a pair of headlights (18, 18A) disposed on both leading end lateral sides of the front cowl (10, 10A), each of the headlights (18, 18A) having a lens surface (18a, 18Aa) including at least a part formed to face downwardly, the front cowl structure having headlight neighboring openings (10h, 10Ah) communicating with an inside of the front cowl (10, 10A), **characterized in that**
the headlights (18, 18A) are each formed into a horizontally long, substantially rectangular shape extending from a front surface side of the front cowl (10, 10A) to a corresponding lateral surface, so that the lens surface (18a, 18Aa) formed into an outer surface shape extending substantially along a cowl outer surface in order that air flows smoothly along the lens surfaces (18a, 18Aa) while the vehicle is running;
the headlight neighboring openings (10h, 10Ah) are disposed on the rear portion side of the lens surfaces (18a, 18Aa) to branch a lens surface airflow (f18) flowing along the lens surfaces (18a, 18a) into an airflow flowing in the headlight neighboring openings (10h) and a surface airflow (f5) that flows toward the rear of the vehicle in order to disrupt a laminar flow condition of the lens surface airflow (f18); and
the headlight neighboring openings (10h, 10Ah) are each a slit-shaped opening extending in a vehicle body vertical direction and are each formed by a lens edge portion (18ae, 18Aae) of the headlight (18, 18A) and a headlight opening edge portion (10he, 10Ahe) of the front cowl (10, 10A).

2. The front cowl structure for a saddle riding type vehicle (100) according to claim 1, wherein
the edge portions (10he, 10Ahe) of the front cowl (10, 10A) are formed so as to bulge outwardly relative to the lens surfaces (18a, 18Aa) at upper and lower sides and rearward sides of the headlights (18, 18A).

3. The front cowl structure for a saddle riding type vehicle (100) according to claim 1 or 2, wherein
the structure has at least a pair of left and right side openings (10sh, 10shh) that allow an airflow that has flowed in the front cowl through the headlight neighboring openings (10h) to flow outwardly in a vehicle width direction of the front cowl (10).

4. The front cowl structure for a saddle riding type vehicle (100) according to claim 3, further comprising:
airflow guide portions (10g) for guiding an airflow that has flowed in the front cowl (10) through the headlight neighboring openings (10h) toward the side openings (10sh).

5. The front cowl structure for a saddle riding type vehicle (100) according to claim 3 or 4, wherein
the side openings (10sh) are each formed into a slit extending in a vehicle body vertical direction.

## Patentansprüche

1. Frontverkleidungskonstruktion für ein Fahrzeug vom Sattelfahrtyp (100), aufweisend:
eine Frontverkleidung (10, 10A) zum Abdecken wenigstens eines vorderen Endabschnitts (100a) des Fahrzeugs; und
ein Paar von Scheinwerfern (18, 18A), die an beiden seitlichen Seiten des vorderen Endes der Frontverkleidung (10, 10A) angeordnet sind, wobei jeder Scheinwerfer (18, 18A) eine Linsenfläche (18a, 18Aa) einschließlich eines Teils hat, der so gebildet ist, dass er nach unten gerichtet ist, wobei die Frontverkleidungskonstruktion dem Scheinwerfer benachbarte Öffnungen (10h, 10Ah) hat, die mit einer Innenseite der Frontverkleidung (10, 10A) verbunden sind,
**dadurch gekennzeichnet, dass**
die Scheinwerfer (18, 18A) in einer horizontal länglichen, im Wesentlichen rechteckigen Form gebildet sind, die sich von einer vorderen Fläche der Frontverkleidung (10, 10A) zu einer entsprechenden seitlichen Fläche erstreckt, so dass die Linsenfläche (18a, 18Aa), die in der äußeren Oberflächenform gebildet ist, sich im Wesentlichen entlang einer äußeren Verkleidungsfläche erstreckt, damit Luft reibungslos entlang der Linsenfläche (18a, 18Aa) fließt, während das Fahrzeug fährt;
die dem Scheinwerfer benachbarten Öffnungen (10h, 10Ah) an einer hinteren Bereichsseite der Linsenfläche (18a, 18Aa) angeordnet sind, um einen Luftstrom (F18), der entlang der Linsenfläche (18a, 18Aa) strömt in einen Luftstrom aufzuteilen, der in die dem Scheinwerfer benachbarten Öffnungen (10h) strömt, und einen Oberflächenluftstrom (F5), der auf die Rückseite des Fahrzeugs zuströmt, damit eine laminare Strömungsbedingung des Luftstroms der Linsenfläche des Luftstroms (f18) der Linsenfläche gestört wird; und
die dem Scheinwerfer benachbarten Öffnungen (10h, 10Ah) jeweils schlitzförmige Öffnungen sind, die sich in einer vertikalen Fahrzeugrichtung erstrecken und die durch einen Linsenrandbereich (18ae, 18Aae) des Scheinwerfers (18, 18A) und einen Scheinwerferöffnungsrandbereich (10he, 10Ahe) der Frontverkleidung (10, 10A) gebildet werden.

2. Frontverkleidungskonstruktion für ein Fahrzeug vom Sattelfahrtyp (100) gemäß Anspruch 1, wobei
die Randbereiche (10he, 10Ahe) der Frontverkleidung (10, 10A) so geformt sind, dass sie sich nach außen relativ zu der Linsenfläche (18a, 18Aa) an einer oberen und unteren Seite und hinteren Seiten des Scheinwerfers (18, 18A) ausbeulen.

3. Frontverkleidungskonstruktion für ein Fahrzeug vom Sattelfahrtyp (100) gemäß Anspruch 1 oder 2, wobei
die Konstruktion wenigstens ein Paar von rechten und linken Seitenöffnungen (10sh, 10shh) hat, die einem Luftstrom ermöglichen, der in die Frontverkleidung durch die vom Scheinwerfer benachbarten Öffnungen (10h) strömt nach außen in der Fahrzeugbreitenrichtung der Frontverkleidung (10) zu strömen.

4. Frontverkleidungskonstruktion für ein Fahrzeug vom Sattelfahrtyp (100) gemäß Anspruch 3, weiterhin aufweisend:
Luftstrom-Leitabschnitte (10g) zum Leiten eines Luftstroms, der in die Frontverkleidung (10) durch die dem Scheinwerfer benachbarten Öffnungen (10h) auf die seitlichen Öffnungen (10sh) zugeströmt ist, zu leiten.

5. Frontverkleidungskonstruktion für ein Fahrzeug vom Sattelfahrtyp (100) gemäß Anspruch 3 oder 4, wobei die Seitenöffnungen (10sh) jeweils in einem Schlitz gebildet sind, der sich in einer vertikalen Fahrzeugrichtung erstreckt.

## Revendications

1. Structure de capot avant pour un véhicule de type à selle (100), comprenant :
un capot avant (10, 10A) pour recouvrir au moins une partie d'extrémité avant de véhicule (100a) ; et
une paire de phares (18, 18A) disposés sur les deux côtés latéraux d'extrémité avant du capot avant (10, 10A), chacun des phares (18, 18A) ayant une surface de lentille (18a, 18Aa) comprenant au moins une partie formée pour être orientée vers le bas, la structure de capot avant ayant des ouvertures voisines de phare (10h, 10Ah) communiquant avec l'intérieur du capot avant (10, 10A),
**caractérisée en ce que** :
les phares (18, 18A) sont chacun formés en une forme horizontalement longue, sensiblement rectangulaire s'étendant à partir d'un côté de surface avant du capot avant (10, 10A) jusqu'à une surface latérale correspondante, de sorte que la surface de lentille (18A, 18Aa) formée dans une forme de surface externe s'étendant sensiblement le long d'une surface externe de capot de sorte que l'air s'écoule régulièrement le long des surfaces de lentille (18a, 18Aa) alors que le véhicule roule ;
les ouvertures voisines de phares (10h, 10Ah) sont disposée du côté de la partie arrière des surfaces de lentille (18a, 18Aa) pour bifurquer un écoulement d'air de surface de lentille (f18) s'écoulant le long des surfaces de lentille (18a, 18Aa) en un écoulement d'air s'écoulant dans les ouvertures voisines de phare (10h) et un écoulement d'air de surface (f5) qui s'écoule vers l'arrière du véhicule afin d'interrompre une condition d'écoulement laminaire de l'écoulement d'air de surface de lentille (f18) ; et
les ouvertures voisines de phare (10h, 10Ah) sont chacune une ouverture en forme de fente s'étendant dans la direction verticale du corps de véhicule et sont chacune formées par une partie de bord de lentille (18ae, 18Aae) du phare (18, 18A) et une partie de bord d'ouverture de phare (10he, 10Ahe) du capot avant (10, 10A).

2. Structure de capot avant pour un véhicule de type à selle (100) selon la revendication 1, dans laquelle :
les parties de bord (10he, 10Ahe) du capot avant (10, 10A) sont formées afin de se renfler vers l'extérieur par rapport aux surfaces de lentille (18a, 18Aa) au niveau des côtés supérieur et inférieur et des côtés arrière des phares (18, 18A).

3. Structure de capot avant pour un véhicule de type à selle (100) selon la revendication 1 ou 2, dans laquelle :
la structure a au moins une paire d'ouvertures latérales gauche et droite (10sh, 10shh) qui permettent qu'un écoulement d'air qui s'est écoulé dans le capot avant en passant par les ouvertures voisines de phare (10h) s'écoule vers l'extérieur dans le sens de la largeur du véhicule du capot avant (10).

4. Structure de capot avant pour un véhicule de type à selle (100) selon la revendication 3, comprenant en outre :
des parties de guidage d'écoulement d'air (10g) pour guider un écoulement d'air qui s'est écoulé dans le capot avant (10) en passant par les ouvertures voisines de phare (10h) vers les ouvertures latérales (10sh).

5. Structure de capot avant pour un véhicule de type à selle (100) selon la revendication 3 ou 4, dans laquelle :
les ouvertures latérales (10sh) sont chacune formées dans une fente s'étendant dans une direction verticale du corps de véhicule.
